# EUROPÄISCHE PATENTSCHRIFT

(11) **EP 3 864 427 B1**
(45) Veröffentlichungstag und Bekanntmachung des Hinweises auf die Patenterteilung: **13.12.2023**
(21) Anmeldenummer: 19787238.5
(22) Anmeldetag: 14.10.2019
(51) Int. Cl.: G01S 5/14, B60L 53/12, B60L 53/36, B60L 53/38

(54) **VORRICHTUNG ZUR POSITIONSBESTIMMUNG EINES RELATIV ZU EINEM FAHRZEUG BEWEGBAREN GEGENSTANDES UND EIN DAMIT AUSGESTATTETES FAHRZEUG**
DEVICE FOR DETERMINING THE POSITION OF AN OBJECT MOVABLE RELATIVELY TO A VEHICLE AND A VEHICLE EQUIPPED WITH IT
DISPOSITIF POUR DÉTERMINER LA POSITION D'UN OBJET MOBILE RELATIVEMENT À UN VÉHICULE ET VÉHICULE ÉQUIPÉ DE CELUI-CI

(30) Priorität: 14.10.2018 DE 102018125379
(43) Veröffentlichungstag der Anmeldung: 18.08.2021
(73) Patentinhaber: BRUSA Elektronik AG, 9466 Sennwald (CH)
(72) Erfinder: BÖHLER, Lukas, 7323 Wangs (CH); STAUSS, Hannes, 6850 Dornbirn (CH); BUKOTAS, Karl, 9466 Sennwald (CH)
(74) Vertreter: Rösler Rasch van der Heide & Partner
(86) Internationale Anmeldenummer: PCT/EP2019/077726
(87) Internationale Veröffentlichungsnummer: WO 2020/078873

(56) Entgegenhaltungen:
- DE-A1-102014 106 048
- DE-A1-102015 208 621
- US-A1- 2015 015 193

## Beschreibung

Die Erfindung betrifft eine Vorrichtung zur Positionsbestimmung eines relativ zu einem Fahrzeug bewegbaren Gegenstandes, wobei mindestens eine fahrzeugseitige Kommunikationseinheit außen am Fahrzeug angeordnet ist, die mit mindestens einer gegenstandsseitigen Kommunikationseinheit über Funkwellen kommuniziert, und wobei die mindestens eine fahrzeugseitige Kommunikationseinheit mit einer Datenverarbeitungseinheit gekoppelt ist, die ausgebildet ist, aus den Kommunikationssignalen die Position des Gegenstandes relativ zu einem fahrzeugfesten Koordinatensystem zu bestimmen, wobei die Kommunikationseinheiten als Abstandsmess-Kommunikationseinheiten ausgebildet sind, den Abstand zwischen sich durch Ermittlung der Time-of-Flight (TOF) zu bestimmen, und die Datenverarbeitungseinheit ausgebildet ist, aus mittels der Kommunikation zwischen mindestens drei Kommunikationseinheiten ermittelten mindestens zwei Abstandswerten mittels Trilateration die Position des Gegenstandes im Koordinatensystem zu bestimmen.

Es ist seit langem bekannt, bei Fahrzeugen eine Standortbestimmung von einem beweglichen Gegenstand, zum Beispiel einem "Keyless Entry" System, relativ zu einem fahrzeugfesten Bezugssystem vorzunehmen, um festzustellen, ob sich der Gegenstand (ein elektronischer Fahrzeugschlüssel) im Fahrzeuginneren oder-äußeren befindet. Beispielsweise aus der DE 102 02 330 A1 ist ein solches Verfahren bekannt, bei dem die Standortbestimmung mittels einer Feldstärkemessung eines vom Gegenstand ausgesendeten Funksignals erfolgt. Der Gegenstand analysiert die Feldstärken der Signale von mehreren fahrzeugseitigen Kommunikationseinheiten und ermittelt daraus, ob sich der Gegenstand im Fahrzeuginneren oder -äußeren befindet.

Es ist ferner möglich, die mittels der gemessenen Feldstärken ermittelten Abstände zwischen den Kommunikationseinheiten mittels einer Trilateration-Rechenoperation zu einer Standortbestimmung zu benutzen.

Es ist ferner aus der WO 2016/180952 A1, der DE 10 2015 209 755 A1 sowie der DE 10 206 217 532 A1 bekannt, mittels einer Time-of-flight Zeitmessung eine Entfernungsbestimmung zwischen zwei Kommunikationseinheiten vorzunehmen.

Die US 2015/0015193 A1 offenbart eine Vorrichtung gemäß dem Oberbegriff von Anspruch 1, bei der mittels Trilateration die Entfernung eines elektisch betriebenen Fahrzeugs von einer

Ladestation bestimmt wird und der Ladestation dabei eine Kennzeichnung zur Identifikation des Fahrzeugs übermittelt wird, mittels der die Ladestation ermitteln kann, ob das Fahrzeug zur Inanspruchnahme einer elektischen Ladung befugt ist.

Die DE 10 1014 106 048 A1 offenbart eine Entfernungsmessvorrichtung zwischen Fahrzeugen mittels Trilateration, bei der mittels Sensoren erfasster Metadaten der Fahrzeuge übermittelt werden.

Die Aufgabe der Erfindung ist es, bei einer befahrbaren Topographie mit einer Anzahl Kommunikationsbaken durch Entfernungsmessung mittels Trilateration eine verbesserte Navigation auf der befahrbaren Topographie zu erreichen.

Die Erfindung ergibt sich aus den Merkmalen von Anspruch 1. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung sowie der Erläuterung von Ausführungsbeispielen der Erfindung, die in den Figuren dargestellt sind.

Erfindungsgemäß wird die Aufgabe dadurch gelöst, dass Kommunikationsbaken mit einem Datenspeicher verbunden sind, der Metadaten zur Ortsbeschreibung der Topographie umfasst und die Kommunikationsbaken ansteuerbar sind, bei der Kommunikation mit mindestens einer fahrzeugseitigen Kommunikationseinheit die Metadaten an diese zu übermitteln.

Unter Gegenstand wird ein beliebiges mit mindestens einer Kommunikationseinheit versehenes Objekt verstanden. Es kann sich um einen elektronischen Schlüssel, ein mobiles Kommunikationsgerät wie ein Smartphone, eine Bake, eine bodenfeste Ladestation für ein Elektrofahrzeug oder ein anderes stehendes oder in Fahrt befindliches Fahrzeug handeln.

Eine Kommunikationseinheit ist eine Sende- und Empfangseinheit mit Kontrollvorrichtung, beispielsweise wie in der WO 2016/180952 A1 beschrieben. Zwei Kommunikationseinheiten kommunizieren auf einer gemeinsamen Frequenz, insbesondere im Ultra-Breitband UWB und tauschen dabei erfindungsgemäß neben den für die Abstandsbestimmung notwendigen Signalen weitere Metadaten aus, welche die jeweils empfangende Kommunikationseinheit an deren Steuerungseinheit übermittelt, so dass daraus von der empfangenden Kommunikationseinheit weitere Informationen über den Gegenstand gewonnen werden können, z.B. ob es sich beim Gegenstand um ein Fahrzeug, eine Bake oder Schranke handelt. Es können auch Lagedaten oder eindeutige Identifikationscodes übermittelt werden, damit bei mehreren parallelen Kommunikationspfaden immer bestimmbar ist, mit welcher Kommunikationseinheit die Verbindung erfolgt.

Diese Ausbildung ermöglicht eine Abstandsbestimmung auf der Grundlage einer Trilateration mit einer Genauigkeit von ca. 20-70 mm und bei Verwendung mehrerer fahrzeugseitiger bzw. gegenstandsseitiger Kommunikationseinheiten eine Positionsbestimmung auch mit höherer Genauigkeit. Da eine mit den fahrzeugseitigen Kommunikationseinheiten verbundene und diese steuernde Datenverarbeitungseinheit Positionsinformationen der Sensoren im fahrzeugfesten Koordinatensystem enthält, ist die Berechnung der Position eines jeden mit mindestens zwei fahrzeugseitigen Kommunikationseinheiten kommunizierende gegenstandsseitige Kommunikationseinheit möglich.

Gemäß der Erfindung ist der Gegenstand als ortsfeste Kommunikationsbake ausgebildet, vorzugsweise an einer Schleuse, einem Tor oder einem Schrankenbereich. Eine solche Kommunikationsbake, die Metadaten bei der Kommunikation versendet, insbesondere einem 2D- oder 3D-Topographiedaten einer Anlage wie einer Tiefgarage, ermöglicht einem Fahrzeug, innerhalb der Anlage zu manövrieren, beispielsweise eine freie Parkstelle oder einen Ausgang anzufahren. Das Fahrzeug kann auf diese Weise durch Kommunikation mit mehreren Baken feststellen, wo es sich innerhalb der Anlage befindet.

Insbesondere wenn der Gegenstand auch mindestens zwei Kommunikationseinheiten umfasst, kann neben der Position auch eine Lage bzw. Orientierung des Gegenstandes im fahrzeugseitigen Koordinatensystem ermittelt werden. Dazu müssen bei der Kommunikation zwischen den Kommunikationseinheiten weitere Lageinformationen ausgetauscht werden. Insbesondere wenn der Gegenstand beispielsweise zwei Kommunikationseinheiten aufweist, müssen mindestens Informationen zum Abstand zwischen den Kommunikationseinheiten und Identifizierer mit übermittelt werden. Vorzugsweise werden jedoch weitere Metadaten übermittelt, aus denen weitere Informationen über den Gegenstand gewonnen werden können.

Die Positionsbestimmung einer GPM gegenüber einem Fahrzeug (genauer gesagt dessen Gegenstück, einer am Fahrzeugboden angebrachten "Car Pad Module" = CPM) erfolgt herkömmlicherweise mittels einer Erkennung elektromagnetischer Felder auf der GPM. Dazu sind mehrere Spulen am Rand der Ladespule des GPM angebracht. Der Stromfluss durch die Spulen erzeugt ein schwaches elektromagnetisches Feld in der Umgebung, was eine feine Sensorik für geringe Feldstärken erfordert, aber gleichzeitig hohe Feldstärken beim Ladevorgang aushalten muss. Die Erfindung ermöglicht demgegenüber eine Entkopplung der Leistungsübertragung von der GPM auf die CPM , wobei eine Positionsbestimmung auch während des Ladevorgangs möglich ist.

Gemäß einer vorteilhaften Weiterbildung weist die bodenfeste Energieübertragungseinrichtung (GPM) mindestens drei, vorzugsweise vier, beabstandet angeordnete gegenstandsseitige, also GPM-seitige Kommunikationseinheiten auf. Für die Positionsbestimmung der GPM ist bei der Verwendung mehrerer GPM-seitiger Kommunikationseinheiten eine einzige fahrzeugseitige Kommunikationseinheit, die vorzugsweise Teil der CPM ist, ausreichend, da über die Kommunikationskanäle die Positionsdaten der GPM-seitigen Kommunikationseinheiten in einem GPM-Koordinatensystem mit übertragen werden können und die Datenverarbeitungseinheit anhand der Abstandsdaten in Verbindung mit den besagten Positionsdaten im GPM-Koordinatensystem die Position und vorzugsweise auch relative Lage (Ausrichtung) derselben bestimmen kann. Je mehr fahrzeugseitige Kommunikationseinheiten mit den GPM-seitigen Kommunikationseinheiten kommunizieren können, um so präziser wird dabei die Positions- und Lagebestimmung.

Gemäß einer weiteren vorteilhaften Weiterbildung der Erfindung ist eine gegenstandsseitige Kommunikationseinheit in einem Funkschlüssel zum Betreiben des Fahrzeugs angeordnet. Der Funkschlüssel ist also der Gegenstand. Es kann hierdurch eine Alternative zu den gängigen auf Feldstärkemessungen beruhenden Keyless-Systemen bereitgestellt werden. Gerade für elektrisch angetriebene Fahrzeuge ergibt sich eine Synergie, wenn die gleichen Kommunikationseinheiten für die GPM-CPM-Positionierung als auch für die Keyless-Funktionalitäten genutzt werden können.

Gemäß einer vorteilhaften Weiterbildung der Erfindung kommunizieren die Kommunikationseinheiten mittels Ultra-Breitband-Kommunikation (UWB) miteinander. Dieses Frequenzband ermöglicht eine hohe Positioniergenauigkeit.

Weitere Vorteile, Merkmale und Einzelheiten ergeben sich aus der nachfolgenden Beschreibung, in der - unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Figur 1:: eine schematische Draufsicht eines elektrisch betriebenen Kraftfahrzeugs neben einem GPM;
- Figur 2:: eine schematische Draufsicht auf zwei miteinander kommunizierende Kraftfahrzeuge;
- Figur 3:: eine schematische Draufsicht auf eine Umgebung eines elektrisch betriebenen Kraftfahrzeugs.

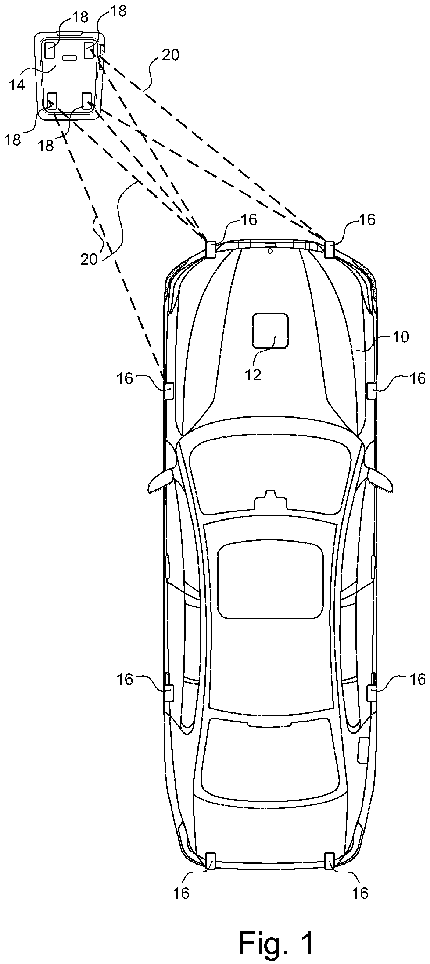

In **Figur 1** ist ein elektrisch betriebenes Fahrzeug 10 gezeigt, dessen Antriebs- bzw. Batterieeinheiten nicht dargestellt sind. Das Fahrzeug 10 besitzt auf der Unterseite ein CPM 12, das mit einer am Boden befestigen GPM 14 zusammenwirkt, um elektrische Energie induktiv zu übertragen. Dazu ist die GPM 14 über nicht dargestellte Leitungen mit einem elektrischen Stromnetz gekoppelt und umfasst mindestens eine nicht gezeigte Spule, die mit einer darüber anzuordnenden Spule des CPM 12 zur induktiven Übertragung elektrischer Energie mit einer Leistung von mehreren kW zusammenwirkt. Zu diesem Zweck muss sich die CPM 12 des Fahrzeugs 10 jedoch möglichst direkt oberhalb der GPM 14 befinden. Ein Fahrer oder auch eine autonome Steuereinrichtung des Fahrzeugs 10 sollte daher in der Lage sein, das Fahrzeug 10 so zu bewegen und anzuhalten, dass die CPM 12 über der GPM 14 zur Ruhe kommt. Für die Positionierung ist es also wichtig, die Position und Ausrichtung/Lage des GPM 14 relativ zum Fahrzeug 10 in jedem Moment der Bewegung des Fahrzeugs 10 zu kennen.

Das Fahrzeug 10 ist daher mit einer Anzahl fahrzeugseitiger Kommunikationseinheiten 16 versehen, die mit einer gemeinsamen Steuereinheit verbunden sind. Auch an der CPM 12 kann eine - nicht dargestellte - fahrzeugseitige Kommunikationseinheit 16 angeordnet sein.

In gleicher Weise sind an der GPM 14 eine Anzahl gegenstandsseitige bzw. GPM-seitige Kommunikationseinheiten 18 angeordnet, die ebenfalls mit einer gemeinsamen Steuereinheit verbunden sind.

Die fahrzeugseitigen Kommunikationseinheiten 16 nehmen jeweils mit den gegenstandsseitigen Kommunikationseinheiten 18 Kontakt auf und ermitteln über einen Time-of-Flight-Datenaustausch die jeweiligen durch gestrichelte Linien angedeuteten Distanzen 20 . Gleichzeitig werden beim Datenaustausch auch Lageinformationen relativ zum jeweiligen Koordinatensystem, also dem fahrzeugseitigen oder GPM-seitigen Koordinatensystem übertragen, sodass das Fahrzeug 10 oder auch die GPM 14 aus den errechneten Distanzen 20 sowie den übertragenen Lagedaten die Position und Ausrichtung des jeweils anderen Körpers bestimmen können. Also genau so, wie das Fahrzeug 10 die Position und Ausrichtung der GPM 14 im fahrzeugeigenen Koordinatensystem bestimmen kann, kann vorzugsweise umgekehrt die GPM im eigenen Koordinatensystem die Lage des Fahrzeugs 10 ermitteln, beispielsweise um solche Informationen optisch oder akustisch an den Fahrer zu signalisieren und die Positionierung zu erleichtern.

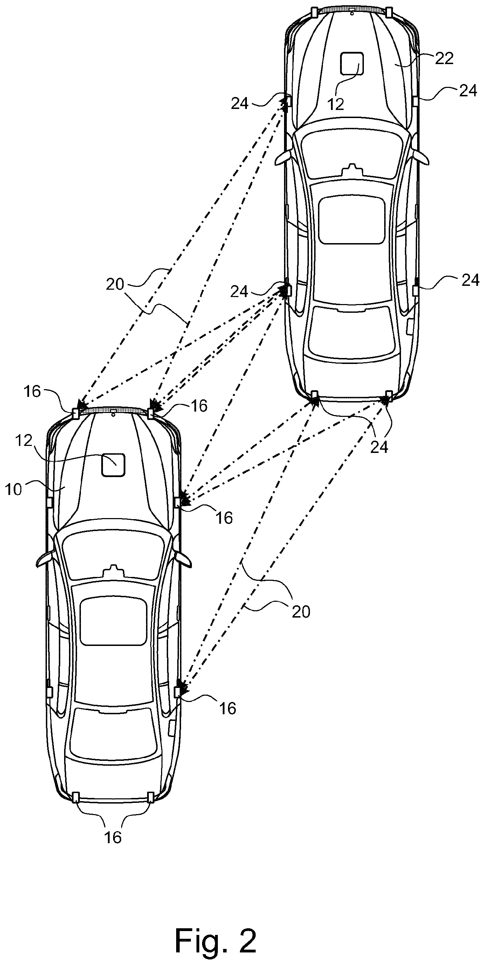

In **Figur 2** sind zwei Fahrzeuge 10, 22 zu sehen. Im dargestellten Fall handelt es sich um zwei fahrende, elektrisch betriebene Fahrzeuge mit CPM 12, was aber nicht notwendig ist. Fahrzeugseitige Kommunikationseinheiten 16 des ersten Fahrzeugs 10 kommunizieren mit zweiten Kommunikationseinheiten 24, bei denen es sich aus Sicht des ersten Fahrzeugs 10 um gegenstandsseitige Kommunikationseinheiten, aus Sicht des zweiten Fahrzeugs 22 um fahrzeugseitige Kommunikationseinheiten handelt. Durch die Vielzahl der Distanzmessungen 20 lässt sich eine Ermittlung der Position und Lage des zweiten Fahrzeugs 22 relativ zum ersten Fahrzeug 10, also in dessen Koordinatensystem, mit hoher Genauigkeit erzielen. Dabei werden vorzugsweise auch Metadaten des Fahrzeugbetriebs mit übertragen, sodass neben den reinen geometrischen Informationen auch weitergehende Informationen ausgetauscht werden können, was insbesondere von Vorteil ist, wenn eines der Fahrzeuge 10, 22 oder beide Fahrzeuge 10, 22 autonom fahren. Durch das System kann sichergestellt werden, dass Daten zu Trajektorien oder Aktionen von einem Fahrzeug auch an das richtige Fahrzeug übertragen werden. Ansonsten könnte die Information beispielsweise einer baldigen Einleitung eines Spurwechsels an irgendein Fahrzeug im Umkreis der Kommunikationsreichweite gesendet werden. Durch das System ist jedoch bekannt, um welches Fahrzeug es sich relativ zum eigenen handelt und zwei Fahrzeuge können sich über die Details den Spurwechsel absprechen.

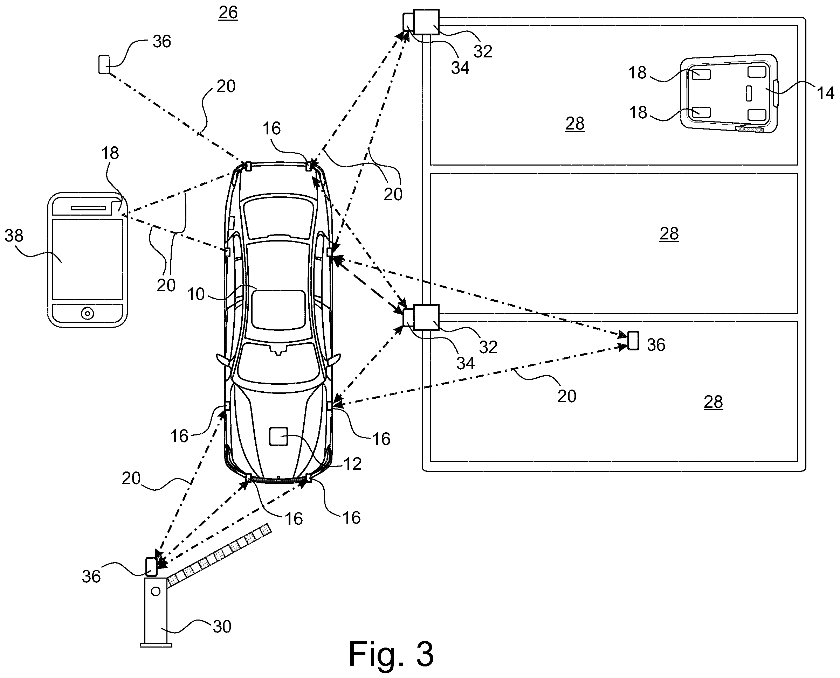

In **Figur 3** ist ein Fahrzeug 10 in einer Garagenanlage 26 dargestellt, die neben Stellplätzen 28 eine Schranke 30 umfasst. In einem der Stellplätze 28 ist ein GPM 14 am Boden fixiert. Es sind ferner zwei Baken 32 mit ortsfesten Kommunikationseinheiten 34 zwischen den Stellplätzen 28 vorhanden, um ein Manövrieren des Fahrzeugs 10 in der Garagenanlage 26 zu erleichtern bzw. ermöglichen. Es können ferner beispielsweise an der Decke weitere zweite ortsfeste Kommunikationseinheiten 36 angeordnet sein. Durch Ermittlung der jeweiligen Distanzen 20 lässt sich eine Bewegung des Fahrzeugs 10 in der Garagenanlage 26 autonom steuern und überwachen, sei es dass die Daten der aus Sicht des Fahrzeugs 10 gegenstandsseitigen bzw. ortsfesten Kommunikationseinheiten 34, 36 von einer Steuerungseinheit im Fahrzeug 10 ausgewertet werden oder dass die Daten des Fahrzeugs 10 an eine die ortsfesten Kommunikationseinheiten 34, 36 steuernde Steuerungseinheit übermittelt werden und von dieser die Steuerung des Fahrzeugs übernommen wird. Weitere bevorzugte Anwendungen sind Bezahlsysteme und Leitsysteme zu Parkplätzen. Zur Positionierung mit gleichzeitiger Kommunikation ist sichergestellt, dass bei einem Datenaustausch auch das richtige Fahrzeug oder Objekt adressiert wird. Würden nur über einen kabellosen Kanal automatische Abrechnungstransaktionen an Schranken vorgenommen, so könnte nicht mit Sicherheit festgestellt werden, welches Fahrzeug adressiert wird. Es könnte sich auch um das Fahrzeug hinter demjenigen des direkt an einer Schranke stehenden Fahrzeugs 10 handeln. Eine weitere bevorzugte Anwendung ist die Steuerung des Zugangs zu Umweltzonen.

In Figur 3 ist ferner ein personenbezogenes Kommunikationsgerät 38 mit einer gegenstandsseitigen Kommunikationseinheit 18 dargestellt. Der Gegenstand 38 kann ein elektrischer Schlüssel oder ein Smartphone o.ä. sein. Mittels der Anordnung lassen sich die Distanzen des personenbezogenen Kommunikationsgerätes 38 zum Fahrzeug 10 bestimmen und damit auch ermitteln, ob sich das Kommunikationsgerät 38 innerhalb oder außerhalb des Fahrzeugs 10 befindet. Damit kann mittels der erfindungsgemäßen Vorrichtung ein alternatives Keyless-System bereitgestellt werden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

### Bezugszeichenliste

- 10: Fahrzeug
- 12: CPM
- 14: GPM
- 16: fahrzeugseitige Kommunikationseinheiten
- 18: gegenstandsseitige Kommunikationseinheiten
- 20: Distanzen
- 22: zweites Fahrzeug
- 24: zweite Kommunikationseinheiten
- 26: Garagenanlage
- 28: Stellplätze
- 30: Schranke
- 32: Bake
- 34: ortsfeste Kommunikationseinheiten
- 36: zweite ortsfeste Kommunikationseinheiten
- 38: personenbezogenes Kommunikationsgerät

## Patentansprüche

1. Vorrichtung zur Positionsbestimmung eines relativ zu einem Fahrzeug (10) bewegbaren Gegenstandes (14, 22, 26, 30, 32, 38), wobei mindestens eine fahrzeugseitige Kommunikationseinheit (16) außen am Fahrzeug (10) angeordnet ist, die mit mindestens einer gegenstandsseitigen Kommunikationseinheit (18) über Funkwellen kommuniziert, und wobei die mindestens eine fahrzeugseitige Kommunikationseinheit (16) mit einer Datenverarbeitungseinheit gekoppelt ist, die ausgebildet ist, aus den Kommunikationssignalen die Position des Gegenstandes (14, 22, 26, 30, 32, 38) relativ zu einem fahrzeugfesten Koordinatensystem zu bestimmen, wobei die Kommunikationseinheiten (16, 18) als Abstandsmess-Kommunikationseinheiten ausgebildet sind, den Abstand zwischen sich durch Ermittlung der Time-of-Flight (TOF) zu bestimmen, und die Datenverarbeitungseinheit ausgebildet ist, aus mittels der Kommunikation zwischen mindestens drei Kommunikationseinheiten (16, 18) ermittelten mindestens zwei Abstandswerten mittels Trilateration die Position des Gegenstandes (14, 22, 26, 30, 32, 38) im Koordinatensystem zu bestimmen, wobei der Gegenstand eine befahrbare Topographie ist und eine Anzahl Kommunikationsbaken (32) beabstandet angeordnet sind, **dadurch gekennzeichnet, dass** die Kommunikationsbaken (32) mit einem Datenspeicher verbunden sind, der Metadaten zur Ortsbeschreibung der Topographie umfasst und die Kommunikationsbaken (32) ansteuerbar sind, bei der Kommunikation mit mindestens einer fahrzeugseitigen Kommunikationseinheit (16) die Metadaten an diese zu übermitteln.

2. Vorrichtung nach Anspruch 1, **dadurch gekennzeichnet, dass** die Datenverarbeitungseinheit ausgebildet ist, von mehreren der fahrzeugseitigen Kommunikationseinheiten (16) mit mehreren gegenstandsseitigen Kommunikationseinheiten (18) Abstandswerte zu erfassen, um die Genauigkeit der Abstandsbestimmung zum Gegenstand (14) zu erhöhen.

3. Vorrichtung nach Anspruch 1 oder 2, **dadurch gekennzeichnet, dass** das Fahrzeug als Kraftfahrzeug mit elektrischem Antrieb ausgebildet ist, das an seiner Unterseite eine induktive, fahrzeugseitige Energieübertragungseinrichtung (12) aufweist und der Gegenstand als damit induktiv koppelbare, bodenfeste Energieübertragungseinrichtung (14) ausgebildet ist.

4. Vorrichtung nach Anspruch 3, **dadurch gekennzeichnet, dass** die bodenfeste Energieübertragungseinrichtung (14) mindestens drei beabstandet angeordnete gegenstandsseitige Kommunikationseinheiten (18) aufweist.

5. Vorrichtung nach Anspruch 3, **dadurch gekennzeichnet, dass** die fahrzeugseitige Energieübertragungseinrichtung (12) mindestens eine fahrzeugseitige Kommunikationseinheit (16) aufweist.

6. Vorrichtung nach einem der Ansprüche 1 bis 5, **dadurch gekennzeichnet, dass** eine gegenstandsseitige Kommunikationseinheit (18) in einem Funkschlüssel (38) zum Betreiben des Fahrzeugs (10) angeordnet ist.

7. Vorrichtung nach Anspruch 1, **dadurch gekennzeichnet, dass** der Gegenstand eine Schleuse, ein Tor oder ein Schrankenbereich (30) ist.

8. Vorrichtung nach Anspruch 1, **dadurch gekennzeichnet, dass** der Gegenstand eine Parkgarage (26) ist.

9. Vorrichtung nach einem der vorherigen Ansprüche, **dadurch gekennzeichnet, dass** die Kommunikationseinheiten (16, 18) mittels Ultra-Breitband-Kommunikation (UWB) miteinander kommunizieren.

## Claims

1. Device for determining the position of an object (14, 22, 26, 30, 32, 38) movable relative to a vehicle (10), wherein at least one vehicle-side communication unit (16) is arranged on the exterior of the vehicle (10) and communicates with at least one object-side communication unit (18) via radio waves, and wherein the at least one vehicle-side communication unit (16) is coupled to a data processing unit which is designed to determine the position of the object (14, 22, 26, 30, 32, 38) relative to a coordinate system fixed to the vehicle on the basis of the communication signals, wherein the communication units (16, 18) are designed as distance measuring communication units to determine the distance between themselves by determining the time-of-flight (TOF), and the data processing unit is designed to determine the position of the object (14, 22, 26, 30, 32, 38) in the coordinate system from at least two distance values determined by means of the communication between at least three communication units (16, 18) by means of trilateration, wherein the object is a navigable topography, and a number of communication beacons (32) are arranged spaced apart, **characterized in that** the communication beacons (32) are connected to a data storage device which comprises metadata regarding the location description of the topography, and the communication beacons (32) can be controlled, during the communication with at least one vehicle-side communication unit (16), to transmit the metadata to the same.

2. Device according to claim 1, **characterized in that** the data processing unit is designed to capture distances values from a plurality of the vehicle-side communication units (16) using a plurality of object-side communication units (18) in order to increase the accuracy of the distance determination to the object (14) .

3. Device according to claim 1 or 2, **characterized in that** the vehicle is designed as a motor vehicle with an electric drive, which vehicle has a vehicle-side, inductive energy transmission device (12) on its underside, and the object is designed as a stationary, inductive energy transmission device (14) which can be coupled to the same.

4. Device according to claim 3, **characterized in that** the stationary energy transmission device (14) has at least three object-side communication units (18) arranged spaced apart.

5. Device according to claim 3, **characterized in that** the vehicle-side energy transmission device (12) has at least one vehicle-side communication unit (16).

6. Device according to one of claims 1 to 5, **characterized in that** an object-side communication unit (18) is arranged in a remote control key (38) for operating the vehicle (10).

7. Device according to claim 1, **characterized in that** the object is a lock, a gate, or a barrier area (30).

8. Device according to claim 1, **characterized in that** object is a parking garage (26).

9. Device according to one of the preceding claims, **characterized in that** the communication units (16, 18) communicate with each other by means of ultra-wide band communication (UWB).

## Revendications

1. Dispositif, destiné à déterminer la position d'un objet (14, 22, 26, 30, 32, 38) mobile par rapport à un véhicule (10), au moins une unité de communication (16) côté véhicule étant placée à l'extérieur sur le véhicule (10), qui communique avec au moins une unité de communication (18) côté objet par l'intermédiaire d'ondes radio, et l'au moins une unité de communication (16) côté véhicule étant connectée avec une unité de traitement de données, qui est conçue pour déterminer à partir des signaux de communication la position de l'objet (14, 22, 26, 30, 32, 38) par rapport à un système de coordonnées stationnaire sur le véhicule, les unités de communication (16, 18) étant conçues sous la forme d'unités de communication télémétriques, pour déterminer la distance entre elles par recherche des temps de vol (TOF), et l'unité de traitement de données étant conçue pour déterminer par trilatération, à partir d'au moins deux valeurs recherchées au moyen de la communication entre au moins trois unités de communication (16, 18) la position de l'objet (14, 22, 26, 30, 32, 38) dans le système de coordonnées, l'objet étant une topographie praticable et un nombre de balises de communication (32) étant placées à distance, **caractérisé en ce que** les balises de communication (32) sont reliées avec une mémoire de données, qui comprend des métadonnées pour la description des lieux de la topographie et les balises de communication (32) sont activables, pour transmettre lors de la communication avec au moins une unité de communication (16) côté véhicule les métadonnées à celle-ci.

2. Dispositif selon la revendication 1, **caractérisé en ce que** l'unité de traitement de données est conçue pour détecter des valeurs de distance entre plusieurs des unités de communication (16) côté véhicule et plusieurs des unités de communication (18) côté objet, pour augmenter la précision de la détermination de la distance par rapport à l'objet (14).

3. Dispositif selon la revendication 1 ou 2, **caractérisé en ce que** le véhicule est conçu sous la forme d'un véhicule automobile à entraînement électrique, qui comporte sur sa face inférieure un système de transfert d'énergie (12) inductif côté véhicule et **en ce que** l'objet est conçu en tant que système de transfert d'énergie (14) implanté au sol, susceptible d'être connecté par induction.

4. Dispositif selon la revendication 3, **caractérisé en ce que** le système de transfert d'énergie (14) implanté au sol comporte au moins trois unités de communication (18) côté objet, placées à distance.

5. Dispositif selon la revendication 3, **caractérisé en ce que** le système de transfert d'énergie (12) côté véhicule comporte au moins une unité de communication (16) côté véhicule.

6. Dispositif selon l'une quelconque des revendications 1 à 5, **caractérisé en ce qu'**une unité de communication (18) côté objet est placée dans une radiocommande (38) pour faire fonctionner le véhicule (10).

7. Dispositif selon la revendication 1, **caractérisé en ce que** l'objet est un sas, un portail ou une zone de barrière (30).

8. Dispositif selon la revendication 1, **caractérisé en ce que** l'objet est un garage couvert (26).

9. Dispositif selon l'une quelconque des revendications précédentes, caractérisé en ce les unités de communication (16, 18) communiquent entre elles par communication par bande ultra-large (UWB).
